Europäisches Patentamt

(19) European Patent Office

Office européen des brevets

(11) Numéro de publication: **0 241 355 B1**

(12) **FASCICULE DE BREVET EUROPEEN**

(45) Date de publication du fascicule du brevet:
19.07.89

(51) Int. Cl.⁴: **C03B 23/035, C03B 23/03**

(21) Numéro de dépôt: 87400716.4

(22) Date de dépôt: 01.04.87

(54) **Dispositif de formage du verre.**

(30) Priorité: 08.04.86 FR 8604962

(43) Date de publication de la demande:
14.10.87 Bulletin 87/42

(45) Mention de la délivrance du brevet:
19.07.89 Bulletin 89/29

(84) Etats contractants désignés:
BE CH DE ES FR GB IT LI SE

(56) Documents cités:
EP-A- 0 003 391
EP-A- 0 005 306
FR-A- 2 085 464

(73) Titulaire: SAINT-GOBAIN VITRAGE, Les
Miroirs 18, avenue d'Alsace, F-92400 Courbevoie(FR)

(72) Inventeur: Prouveur, Hervé, Rue Pasteur, F-59111 Saint
Amand(FR)
Inventeur: Lissillour, Jean, 26, rue de la Fédération,
F-75015 Paris(FR)
Inventeur: Letemps, Bernard, 5, Avenue du Gros
Buisson, F-60150 Thourotte(FR)
Inventeur: Petitcollin, Jean-Marc, 12, rue de Verdun - Le
Plessis-Brion, F-60150 Thourotte(FR)
Inventeur: Perin, Francis, 6, Impasse des Acacias "La
Turiurette", F-58160 Sauvigny-les-Bois(FR)

(74) Mandataire: Leconte, Jean-Gérard et al, Saint-Gobain
Recherche 39, Quai Lucien Lefranc,
F-93304 Aubervilliers Cedex(FR)

ACTORUM AG

## Description

La présente invention concerne un perfectionnement des techniques de formage du verre plat et plus précisément de celles de ces techniques, selon lesquelles les feuilles de verre sont conformées par application contre une forme de bombage à l'aide de forces de nature pneumatique.

Il est connu de nombreux procédés de formage d'une feuille de verre selon lesquels la feuille de verre est chargée en position horizontale dans un four de réchauffement destiné à porter sa température à plus de 500-600°C, dans lequel elle est véhiculée sur un convoyeur tel un lit de rouleaux qui se prolonge en aval du four jusqu'à un poste de bombage. Dans celui-ci la feuille est prise en charge par un dispositif de transfert mobile au moins selon la direction verticale, déposée ensuite sur un cadre de récupération qui la conduit alors au poste de trempe où à tout autre poste de refroidissement.

Selon les cas, le formage a lieu soit au moment et après la pose de la feuille de verre sur le cadre de récupération qui est alors constitué avantageusement par un anneau ouvert dont le contour correspond au contour que l'on désire conférer à la feuille de verre, le bombage s'effectuant alors sous l'effet des forces de gravité et d'inertie, soit au moment de la prise en charge de la feuille de verre par l'organe de transfert qui comporte alors une forme supérieure de bombage dont la courbure correspond à celle de la feuille de verre conformée, soit encore par une combinaison des deux cas précédemment cités.

Les procédés de formage par application de la feuille de ver re contre une forme supérieure de bombage sont particulièrement avantageux, car ils permettent un meilleur contrôle de la déformation du verre dans sa partie centrale, tout en respectant parfaitement la forme souhaitée pour le contour du verre.

Un tel procédé est décrit dans la publication de brevet français Fr 2 085 464. Selon ce document, la feuille de verre est véhiculée dans un four de réchauffage, en position horizontale, par un convoyeur du type lit de rouleaux qui se prolonge en aval du four jusque dan un poste de bombage. Là, la feuille de verre est immobilisée puis transférée verticalement, par une aspiration due à une dépression créée autour de la périphérie de la feuille, jusqu'à une forme supérieure de bombage, courbe, non perforée, contre laquelle elle est appliquée pour être conformée, suivant la courbure principale souhaitée. La dépression est obtenue en plaçant la forme supérieure de bombage dans un caisson sans fond ou jupe, lié à des moyens d'aspiration, et dont le contour intérieur est légèrement plus grand que celui de la feuille de verre alors que le contour de la forme supérieure de bombage est lui légèrement plus petit que celle-ci. Eventuellement, un courbure complémentaire est ensuite conférée au verre, par exemple par pressage.

L'inconvénient principal de ce type de dispositif vient de ce que les dimensions et la géométrie de la forme supérieure et du caisson sans fond sont rigoureusement commandées par celles de la feuille de verre elle-même. Ce qui signifie que toute modification relative à la feuille de verre entraîne la nécessité de remplacer simultanément le caisson et la forme supérieure de bombage.

Ce remplacement doit aussi être fréquemment effectué si les vitrages sont au moins partiellement émaillés. Dans ce cas, l'émail a parfois tendance à coller sur le revêtement de la forme supérieure de bombage, revêtement en tissu ou papier réfractaire collé sur la forme en ciment réfractaire. L'émail provoque alors une détérioration rapide de ce revêtement et il faut retirer la forme supérieure du poste de bombage, la laisser refroidir, coller un nouveau revêtement avant de pouvoir à nouveau l'utiliser.

Une autre limite de ce procédé vient de ce que pour conformer des feuilles de verre suivant un petit rayon de courbure, des puissances d'aspiration importantes sont nécessaires, la distance entre la forme supérieure de bombage et le caisson étant alors augmentée du fait de la courbure de la forme. En pratique, ceci limite les courbures susceptibles d'être obtenues avec ce type de formage.

De plus, pour obtenir une puissance d'aspiration des feuilles de verre suffisante, il est nécessaire que l'espace laissé libre entre la feuille et les parois latérales du caisson reste faible. Aussi, au moindre décalage de la position d'arrêt de la feuille, celle-ci heurte les parois latérales du caisson au moment de son envol et doit alors être conduite au rebut.

La présente invention propose d'améliorer la technique ci-dessus développée afin d'en réduire ses inconvénients, tout en conservant ses advantages.

Selon l'invention et conformément à l'enseignement de la publication de brevet FR 2 085 464, la feuille de verre est soulevée et plaquée contre une forme supérieure de bombage par une dépression qui s'exerce à la périphérie et au voisinage de la périphérie de la feuille de verre. Toutefois et ceci constitue une différence essentielle avec cet art du brevet FR 2 085 464, la face inférieure de la forme supérieure de bombage est placée au moins en partie à l'extérieur du caisson de dépression. En d'autres termes, pour la mise en oeuvre du procédé de formage, selon lequel les feuilles de verre sont amenées horizontalement dans un four de chauffage puis conduites à un poste de formage où elles sont transférées individuellement et verticalement jusqu'à une forme supérieure de bombage, l'application contre la forme supérieure étant obtenue par aspiration due à une dépression créée à la périphérie et au voisinage de la périphérie de la feuille de verre, on propose selon l'invention un dispositif comportant un caisson de dépression dans lequel est placée une forme supérieure de bombage de dimensions inférieures à celle de la feuille de verre à conformer et dont la face inférieure, contre laquelle est appliquée la feuille de verre, est située à l'extérieur du caisson de dépression, c'est à dire que la limite inférieure des parois latérales du caisson est située au-dessus de la limite inférieure de la forme de bombage.

Cette mesure prise relativement à la forme supérieure a pour effet premier que la feuille de verre ne pénètre plus qu'en fin de plaquage à l'intérieur du caisson de dépression, c'est à dire au moment où elle est déjà en partie formée suivant sa courbure principale et occupe une surface moins importante. Ceci entraîne naturellement des fuites latérales plus importante et la nécessité d'une plus grande force d'aspiration. Toutefois, il est apparu que cette mesure d'apparence mineure et plutôt défavorable permettait nombre de développements de l'invention particulièrement avantageux.

En premier lieu et il s'agit là d'un avantage direct, même en cas d'un mauvais centrage de la feuille de verre relativement à la forme supérieure, il n'y a plus à craindre que les bords de la feuille n'entrent en contact avec les parois du caisson de dépression, entraînant alors un marquage irrémédiable du verre.

Cette liberté de positionnement de la feuille relativement à la forme supérieure et surtout au caisson d'aspiration ouvre un grand nombre de choix dans les dimensions relatives de la feuille, de la forme et du caisson.

Ainsi, lorsque les volumes différent pour ce qui concernent leurs dimensions et surtout leur galbe après formage, le changement de forme supérieure peut être effectué sans remplacement simultané du caisson de dépression du fait que la forme supérieure est située selon l'invention, à l'extérieur du caisson de dépression.

Cette mesure est plus spécialement avantageuse si, selon un mode de réalisation particulièrement préféré de l'invention, la forme supérieure de bombage est construite dans un matériau léger, par exemple en acier réfractaire ce qui facilite grandement sa manutention. De plus, la forme supérieure étant montée avantageusement non solidaire du caisson de dépression, le seul remplacement de la forme supérieure en fonction des dimensions du vitrage est possible à l'intérieur même de l'enceinte de formage chauffée, avec un minimum de pertes calorifiques et dans un laps de temps particulièrement bref.

Outre la réduction des contacts entre le verre et les parois latérales du caisson, il est possible de supprimer pratiquement tout contact entre la forme supérieure de bombage et le volume de verre. Ceci est notamment le cas si on emploie une forme supérieure de bombage dotée de plots d'écartement sur lesquels vient s'appuyer la feuille de verre.

Suivant une autre mode de réalisation préféré, car évitant absolument tout contact et frottement entre le verre et la forme supérieure de bombage, on relie la forme supérieure à un dispositif d'arrivée d'air chaud, éventuellement sous pression. Il se forme ainsi entre la forme supérieure et la feuille de verre un coussin d'air protecteur.

Il va de soi que cette dernière solution est de mise en oeuvre un peu plus délicate que les précédentes, mais elle permet le traitement au moyen d'une forme d'aspiration unique de vitrages successifs ne présentant pas par exemple de surfaces libres communes ou dont la partie émaillée est notamment située dans la partie centrale. De plus, l'absence de tout contact assure une qualité optique parfaite et ce dispositif à coussin d'air peut être avantageusement utilisé chaque fois qu'une telle qualité optique est recherchée.

Un mode de réalisation préféré de l'invention facilite l'obtention de formes de vitrages délicates à obtenir, nécessitant un formage complémentaire après le formage par application contre la forme supérieure. Selon cette mise en oeuvre particulièrement avantageuse, le caisson est entouré par une jupe concentrique mobile suivant une direction verticale. Cette jupe concentrique est telle qui'immédiatement avant l'envol de la feuille de verre, elle détermine un caisson provisoire qui est de dimensions légèrement supérieures à la feuille de verre ; ainsi la mobilité de la jupe permet d'introduire facilement une forme de pressage dans l'unité de formage et de plus elle réduit la puissance d'aspiration nécessaire.

D'autres avantages et caractéristiques de l'invention apparaîtront d'une manière plus détaillée dans la description qui suit, faite en référence aux dessins annexés et qui représentent :

• figure 1 : une vue schématique d'une unité de formage mettant en oeuvre un dispositif de formage suivant un mode de réalisation de l'invention.

• figure 2 : une vue schématique en coupe longitudinale d'un ensemble de formage, à savoir un caisson d'aspiration et une forme, réalisé suivant l'enseignement de brevet FR 2 085 464.

• figure 3 : une coupe longitudinale d'un ensemble de formage conforme à un mode de réalisation de l'invention,

• figure 4 : une coupe longitudinale d'un ensemble de formage avec un coussin d'air chaud entre la forme et la feuille de verre.

• figure 5 : une coupe longitudinale d'un dispositif de formage comportant un caisson et une jupe concentrique mobile.

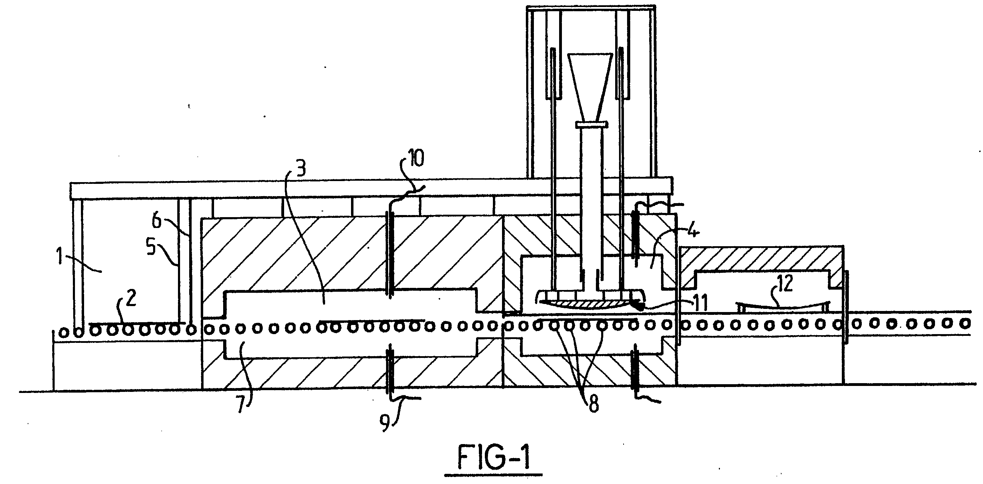

L'unité de formage représentée à la figure 1 comporte successivement une section de chargement 1 des feuilles de verre 2, un four de réchauffage du verre 3 et une cellule de formage de verre 4.

Le four 3, dont l'ouverture est fermée par une série de rideaux 5, 6 souples destinés à éviter les chocs thermiques dans le four au moment du chargement du verre, est traversé par un convoyeur 7 formé par exemple par un lit de rouleaux 8 en silice vitreuse gainés par du tissu réfractaire. Ce four, du type tunnel comporte deux séries 9, 10 de résistances électriques se faisant face, placées de part et d'autre du convoyeur et dont les températures varient en fonction de la posi tion longitudinale et transversale dans le four, de façon à contrôler très précisément l'échauffement du verre. Un tel four permet un très bon contrôle de l'échauffement du verre jusqu'à une température permettant leur formage, généralement de l'order de 630-650°C.

En aval du four, la feuille de verre pénètre dans l'unité de formage 4 proprement dite, son arrivée étant repérée à l'aide de détecteurs optiques, du type photoélectrique, éventuellement combinés avec des détecteurs mécaniques, déplacés par la feuille de verre. De tels détecteurs mécaniques sont par exemple décrit dans la demande de brevet français 85.13801. La détection du verre permet de commander l'arrêt simultané de l'entraînement des rouleaux du convoyeur situés sous le dispositif de formage. A ce moment la feuille de verre est soulevée sous l'effet d'une puissante aspiration et est plaquée contre la forme supérieure de bombage 11 dont elle épouse alors la courbure. L'ensemble constitué par la feuille de verre et la forme supérieure de bombage, ainsi que des éléments permettant de créer l'aspiration, est alors soulevé de manière à laisser une place suffisante pour l'introduction d'un chariot 12 de récupération du verre. La feuille formée est enfin déposée sur ledit chariot qui la conduit grâce à des rails disposés de part et d'autre du convoyeur jusqu'à la cellule suivante de traitement du verre.

La description qui suit examine de façon plus détaillée les caractéristiques de la cellule de formage proprement dite.

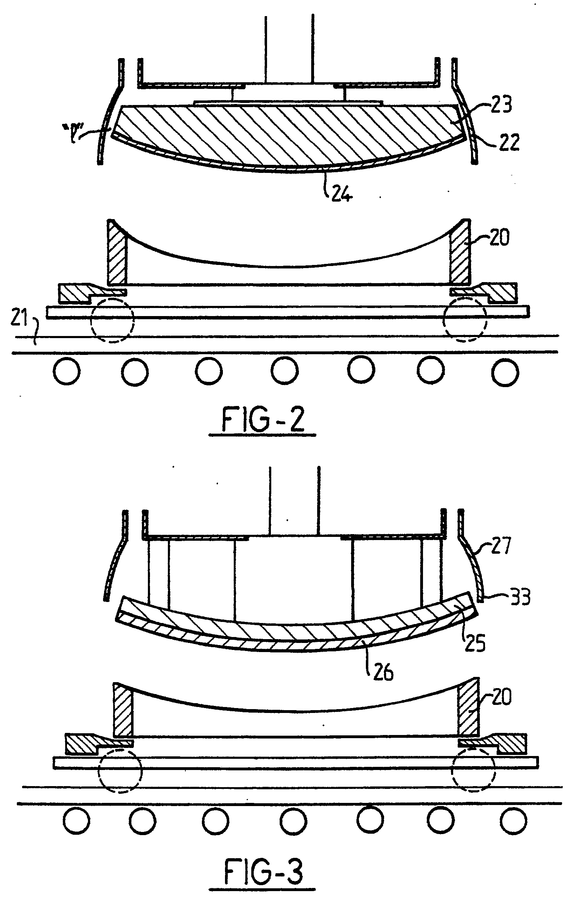

Comme déjà mentionné, le dispositif de formage principal est essentiellement constitué par un caisson sans fond ou jupe et une forme de bombage. On a représenté à la figure 2 un dispositif du type décrit dans le brevet FR 2 085 464 et ce afin de faire mieux apparaître les différences avec les caractéristiques de l'invention faisant l'object de la présente demande.

Sur la figure 2, conformément à l'enseignement dudit brevet FR 2 085 464, un caisson sans fond 22 forme une "jupe" autour d'une forme 23. Le caisson a rigoureusement la même forme géométrique qu'une feuille de verre 24 mais des dimensions légèrement supérieures. Comme d'autre part la forme de bombage 23 a des dimensions légèrement inférieures à celles de la feuille de verre 24, il reste un espace périphérique entre la feuille et le caisson sans fond par où s'effectue une fuite latérale "1", ce qui permet de créer une dépression qui plaque la feuille de verre contre la forme 23, dont elle épouse la forme avant d'être récupérée par le chariot déplacé sur les rails 21. Tout change ment dans les dimensions de la feuille de verre impose une modification de la forme et du caisson, et d'autre part, toute erreur dans le centrage des feuilles de verre conduit à un marquage de la feuille qui est venu heurter les parois latérales du caisson de dépression.

Ces inconvénients sont par contre considérablement réduits si on utilise une forme supérieure de bombage conforme à l'enseignement principal de l'invention et telle qu'illustrée par la figure 3. En effet, avantageusement, la forme supérieure ici référencée 25 est placée de façon que la feuille de verre 26 ne puisse pénétrer dans le caisson sans fond référencé 27, la forme supérieure de bombage étant placée à un niveau inférieur à celui de la limite inférieure des parois latérales du caisson.

De cette façon, les écarts de centrage des feuilles de verre ne peuvent plus entraîner leur marquage. De plus, la forme supérieure de bombage est d'un accès plus facile, surtout si elle est de plus construite dans un matériau relativement léger, mais résistant sans déformation aux températures de travail ici nécessaires, tel qu'un acier réfractaire. En dehors d'une moindre masse, un acier réfractaire présente de plus par rapport au ciments réfractaires recommandés par le brevet FR 2 085 464 l'avantage d'une bien plus grande conductibilité thermique et donc d'une beaucoup plus grande rapidité d'échauffement et de refroidissement, rapidité qui se retrouve au niveau des temps d'interruption du fonctionnement de l'unité de formage pour les changements de formes supérieures de bombage. De plus, le caisson d'aspiration peut alors être construit en deux parties indépendantes, la jupe proprement dite et une chambre d'aspiration, parties munies alors de moyens de démontage. De préférence encore, la jupe du caisson d'aspiration est munie de deux plots 33, en métal ou en téflon par exemple, sur lesquels vient buter le bord avant de la feuille de verre qui est ainsi repositionnée correctement suivant l'axe du convoyeur.

Ces changements de formes supérieures de bombage sont souvent imputables à la dégradation du tissu ou papier réfractaire utilisé pour adoucir le contact entre le verre et la forme de bombage. Aussi, le dispositif de la figure 3 peut recevoir encore différentes améliorations. Tout d'abord, la feuille supérieure peut être dotée d'une série de plots d'écartement contre lesquels vient s'appuyer la feuille de verre. Si celle-ci est en partie émaillée, ces plots sont disposés avantageusement de façon qu'aucun contact ne se produise entre les plots et l'émail, ce qui simultanément limite les risques d'abrasion de l'émail lui-même et la déterioration par l'émail de la surface de contact avec le verre de la forme supérieure de bombage, ce qui d'une part limite les risques d'abrasion de l'émail, et d'autre part supprime les interruptions dues au remplacement du tissu ou papier réfractaire généralement utilisé.

D'une manière encore préférée, les plots d'écartement sont supprimés et on leur substitue un coussin d'air chaud, cette dernière solution étant préférable du point de vue de la qualité optique. De cette façon tout contact entre le verre et la forme supérieure de bombage est interdit ce qui est particulièrement avantageux pour le formage de feuilles de verre présentant un décor émaillé sur toute une face ou au moins dans la partie centrale de celle-ci.

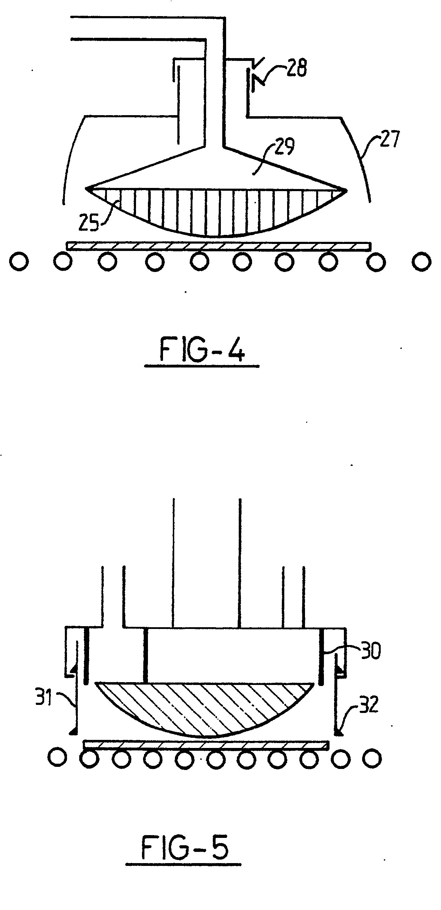

Cette mise en oeuvre est schématisée à la figure 4, Son principe consiste à isoler la forme supérieure de bombage 25 du caisson d'aspiration 27 mis sous dépression à l'aide de la trompe 28 en mettant sous pression relative une chambre 29 située au-dessus de la forme supérieure de bombage 25 et en communication avec la face inférieure de celle-ci ; Ainsi, la forme étant dans ce case percée, par exemple par une série de microperforations, non représentées, un coussin d'air s'oppose au contact entre le verre 26 et la forme supérieure de bombage 25. La chambre 29 sous pression peut selon les cas être alimentée à l'aide d'un compresseur ou tout simplement être reliée à une canalisation 30 débouchant à l'extérieur du caisson 27 dans la cellule de formage, la dépression créée par ailleurs pour l'aspiration de la feuille de verre suffisant à créer alors un appel gazeux et la pression nécessaire à la constitution du coussin d'air.

Dans ce cas, il ne subsiste ainsi aucune cause de frottement entre la forme supérieure et la feuille de verre et le papier ou tissu réfractaire utilisé pour améliorer l'état de la surface de contact peut éventuellement être supprimé. De plus, les deux faces du verre sont alors placées dans les mêmes conditions de température et on constate de ce fait une meilleure qualité optique probablement due à une meilleure homogénéité thermique.

Rappelons que la forme supérieure de bombage est galbée au moins longitudinalement et que sa flèche est égale à celle de la courbure principale que l'on désire conférer au vitrage après bombage, ce qui correspond donc à un formage du verre essentiellement par plaquage contre une forme. Toutefois, dans des cas particuliers, on constate expérimentalement que le verre présente des caractéristiques amenant à surgalber cette forme supérieure pour obtenir en définitif la courbure principale souhaitée.

Si on n'utilise pas des chariots de récupération du verre pleins mais des chariots ouverts en leur centre, il se produit un bombage sphérique de la partie centrale du vitrage alors non soutenue. Pour y remédier et obtenir une feuille de verre formée cylindriquement, on peut selon un caractéristique avantageuse de l'invention conférer à la forme supérieure de bombage un contre-galbage transversal en lui donnant dans la direction perpendiculaire à la direction de bombage principal, une flèche négative que les forces de gravité compensent au moment de la pose du vitrage ramolli sur le cadre 20.

Les modes de réalisation de l'invention précédemment décrits conviennent bien pour l'obtention de vitrages bombés à grand rayon de courbure. Pour l'obtention de vitrages à faible rayon de courbure ou à courbure complexe, notamment à multiples rayons de courbure, le bombage principal, assuré par l'application contre la forme supérieure, doit être complété par une opération complémentaire de bombage, de préférence par pressage encore que d'autres moyens usuels de formage peuvent être également utilisés. Pour celà, il est nécessaire d'introduire sous la forme supérieure de bombage une forme de pressage, ou tout autre outillage de formage complémentaire du verre, opération rendue délicate par la présence de la jupe.

Si l'outillage utilisé est trop encombrant - ce qui est le cas par exemple si l'on souhaite utiliser un outillage standard dont les dimensions sont supérieures à celles du caisson d'aspiration - il est alors préférable d'employer le mode de réalisation de l'invention schématisé à la figure 5, suivant lequel, la jupe 30 est de dimensions très réduites et est doublée de parois 31 mobiles verticalement. En position basse, ces parois atteignent un niveau très légèrement supérieur à celui du verre sur le convoyeur. La dépression se produit ainsi juste à la périphérie du verre ce qui facilite l'envol de la feuille. La mobilité en hauteur des parois permet de les soulever au moment de l'introduction de la forme de pressage, sans avoir à soulever à une hauteur trop importante la forme supérieure de bombage. Les parois 31 portent à leur extrémité inférieure des pattes 32 qui s'appuient contre les bords de la forme de pressage au moment de la récupération de la feuille et pendant l'opération de pressage si la forme supérieure est également utilisée comme contre-forme de pressage. On voit ainsi que le dispositif selon l'invention permet de procéder d'une manière très sim ple à des formages complémentaires par pressage, indispensables dès lors que la forme souhaitée est complexe. De plus, grâce à la présence de ce caisson supplémentaire formé par les parois mobiles 31, l'aspiration est toujours canalisée et les fuites latérales minimisées.

## Revendications

1. Dispositif de formage de feuilles de verre (26) pour la mise en œuvre du procédé de formage selon lequel les feuilles de verre (26) sont amenées horizontalement dans un four de chauffage (3) puis conduites à un poste de formage (4) où elles sont transférées individuellement et verticalement jusqu'à une forme supérieure (11) de bombage, l'application contre la forme supérieure (11) de bombage étant obtenue par aspiration due à une dépression créée à la périphérie et au voisinage de la périphérie de la feuille de verre (26) ledit dispositif comportant un caisson d'aspiration (27) dans lequel est placée la forme supérieure de bombage (26), caractérisé en ce que ladite forme supérieure de bombage (11, 25) a une face inférieure – contre laquelle est appliquée la feuille de verre (26) – de dimensions inférieures à celles de la face de la feuille de verre (26) et en ce que ladite face inférieure de la forme (25) est située à l'extérieur dudit caisson d'aspiration.

2. Dispositif selon la revendication 1, caractérisé en ce que ladite forme supérieure (25) présente une courbure longitudinale égale ou supérieure à la courbure principale que l'on désire conférer à la feuille de verre (26).

3. Dispositif selon une des revendications précédentes, caractérisé en ce que la forme supérieure (26) présente un contre-galbe transversal.

4. Dispositif selon une des revendications précédentes, caractérisé en ce que ledit caisson d'aspiration (27) est de dimensions inférieures à celles de la feuille de verre traitée.

5. Dispositif selon une des revendications précédentes, caractérisé en ce que les parois latérales (30) du caisson d'aspiration sont doublées par des parois (31) mobiles verticalement.

6. Dispositif selon une des revendications précédentes, caractérisé en ce que lesdites parois mobiles (31) comportent à leur extrémité inférieure des pattes d'appui venant s'appuyer sur des pattes (32) correspondantes d'une presse femelle.

7. Dispositif suivant une des revendications précédentes, caractérisé en ce que ladite forme supérieure (25) est munie d'une série de perforations reliées à une arrivée d'air chaud, de sorte qu'il se forme entre la feuille de verre (26) et la forme supérieure (25) un coussin d'air.

8. Dispositif suivant une des revendications précédentes, caractérisé en ce que ladite forme supérieure (25) est en acier réfractaire.

9. Dispositif suivant une des revendications précédentes, caractérisé en ce que le caisson d'aspiration (27) est constitué d'une chambre d'aspiration et d'une jupe munies de moyens de démontage.

10. Application du dispositif suivant une des revendications précédentes, au formage de feuilles de verre au moins partiellement émaillées.

## Patentansprüche

1. Vorrichtung zum Biegen von Glasscheiben (26) zur Durchführung eines Biegeverfahrens, bei dem die Glasscheiben (26) horizontal durch einen Heizofen (3) geführt und dann zu einer Biegestation (4) geleitet werden, wo sie einzeln und in vertikaler Richtung einer oberen Biegeform (11) übergeben werden, wobei das Anlegen an die obere Biegeform (11) durch Ansaugen aufgrund eines Unterdruckes erfolgt, den man an der Peripherie und nahe der Peripherie der Glasscheibe (26) erzeugt, wobei die Vorrichtung einen Ansaugkasten (27) umfaßt, in dem die obere Biegeform (25) angeordnet ist, dadurch gekennzeichnet, daß die obere Biegeform (11, 25) eine untere Fläche – gegen die die Glasscheibe (26) zur Anlage kommt – von Abmessungen hat, die kleiner sind als die der Fläche der Glasscheibe (26) und daß die untere Fläche der Form (25) außerhalb des Ansaugkastens angeordnet ist.

2. Verfahren nach Anspruch 1, dadurch gekennzeichnet, daß die obere Form (25) eine Längskrümmung gleich oder größer als die Hauptkrümmung hat, die man der Glasscheibe (26) geben will.

3. Vorrichtung nach einem der vorhergehenden Ansprüche, dadurch gekennzeichnet, daß die obere Form (25) eine quer verlaufende Gegenbiegung aufweist.

4. Vorrichtung nach einem der vorhergehenden Ansprüche, dadurch gekennzeichnet, daß der Ansaugkasten (27) Abmessungen aufweist, die kleiner sind als die der behandelten Glasscheibe.

5. Vorrichtung nach einem der vorhergehenden Ansprüche, dadurch gekennzeichnet, daß die Seitenwände (30) des Ansaugkastens durch vertikal bewegbare Wände (31) verdoppelt sind.

6. Vorrichtung nach einem der vorhergehenden Ansprüche, dadurch gekennzeichnet, daß die bewegbaren Wände (31) an ihren unteren Enden Stützteile aufweisen, die sich auf entsprechenden Stützen (32) einer matrizenartigen Gegenform abstützen.

7. Vorrichtung nach einem der vorhergehenden Ansprüche, dadurch gekennzeichnet, daß die obere Form (25) mit einer Reihe von Löchern versehen ist, die mit einer Warmluftzufuhr derart verbunden sind, daß sich zwischen der Glasscheibe (26) und der oberen Form (25) ein Luftkissen bildet.

8. Vorrichtung nach einem der vorhergehenden Ansprüche, dadurch gekennzeichnet, daß die obere Form (25) aus hitzebeständigem Stahl besteht.

9. Vorrichtung nach einem der vorhergehenden Ansprüche, dadurch gekennzeichnet, daß der Ansaugkasten (27) von einer Ansaugkammer und einem Mantel gebildet ist, die mit Mitteln zur Demontage versehen sind.

10. Anwendung der Vorrichtung nach einem der vorhergehenden Ansprüche zum Biegen von Glasscheiben, die zumindest teilweise mit einer Einbrennfarbe versehen sind.

## Claims

1. Apparatus for shaping sheets of glass (26) for carrying out the shaping method according to which the glass sheets (26) are brought horizontally into a heating furnace (3) and are then brought to a shaping station (4), where they are transferred individually and vertically as far as an upper curving mould (11), the application against the upper curving mould (11) being obtained by suction caused by a sub-pressure created at the periphery and in the vicinity of the periphery of the glass sheet (26), said apparatus comprising a suction chest (27), in which the upper curving mould (26) is placed, characterized in that said upper curving mould (11, 25) has a lower face, against which the glass sheet (26) is applied, with dimensions smaller than those of the face of the glass sheet (26) and in that said lower face of the mould (25) is situated outside said suction chest.

2. Apparatus according to claim 1, characterized in that said upper mould (25) has a longitudinal curvature equal to or greater than the principal curvature which it is desired to impart to the glass sheet (26).

3. Apparatus according to one of the preceding claims, characterized in that the upper mould (26) has a transverse counter-curvature.

4. Apparatus according to one of the preceding claims, characterized in that said suction chest (27) has dimensions smaller than those of the glass sheet treated.

5. Apparatus according to one of the preceding claims, characterized in that the lateral walls (30) of the suction chest are lined by vertically movable walls (31).

6. Apparatus according to one of the preceding claims, characterized in that said movable walls (31) comprise, at their lower end, support feet which come into bearing on corresponding feet (32) of a female press.

7. Apparatus according to one of the preceding claims, characterized in that said upper mould (25) is equipped with a series of perforations connected to a hot air inlet, so that an air cushion forms between the glass sheet (26) and the upper mould (25).

8. Apparatus according to one of the preceding claims, characterized in that said upper mould (25) is of refractory steel.

9. Apparatus according to one of the preceding claims, characterized in that the suction chest (27) is constituted of a suction chamber and a skirt equipped with dismantling means.

10. Application of the apparatus according to one of the preceding claims to the shaping of glass sheets which are at least partly enamelled.

FIG-1

EP 0 241 355 B1

FIG-2

FIG-3

FIG-4

FIG-5